## Europäisches Patentamt

## European Patent Office

## Office européen des brevets

(11) Veröffentlichungsnummer: **0 094 547**
**B1**

(12) # EUROPÄISCHE PATENTSCHRIFT

(45) Veröffentlichungstag der Patentschrift:
12.08.87

(51) Int. Cl.⁴: **B 09 B 1/00**

(21) Anmeldenummer: 83104321.1

(22) Anmeldetag: 02.05.83

(54) Anlage zur Beseitigung von Sickerwasser und Faulgas in Abfalldeponien.

(30) Priorität: 17.05.82  DE 3218587

(43) Veröffentlichungstag der Anmeldung:
23.11.83 Patentblatt 83/47

(45) Bekanntmachung des Hinweises auf die Patenterteilung:
12.08.87 Patentblatt 87/33

(84) Benannte Vertragsstaaten:
AT BE CH DE FR GB IT LI LU NL SE

(56) Entgegenhaltungen:
FR-A-2 267 285
FR-A-2 354 974
FR-A-2 472 942
US-A-3 917 508

MÜLL UND ABFALL, 14. November 1982, Seiten 314-320, Inst. Stadtbauwesen, Techn. Univ. Braunschweig, DE; H.-J. EHRIG: "Aspekte der Verdampfung von Sickerwasser aus Mülldeponien mit Hilfe von Deponiegas"
STUTTGARTER BERICHTE ZUR ABFALLWIRTSCHAFT - FORTSCHRITTE DER DEPONIETECHNIK; G. KREISCHER: "Verdampfung von Sickerwasser mittels Deponiegas"

(73) Patentinhaber: INTERATOM Gesellschaft mit beschränkter Haftung, Friedrich-Ebert-Strasse, D-5060 Bergisch Gladbach 1 (DE)

(72) Erfinder: Boese, Friedrich-Karl, Dr. Dipl.-Ing., Hackberg 14, D-5060 Bergisch-Gladbach (DE)
Erfinder: Braun, Gerd, Dipl.-Phys., Otto-Hahn-Strasse 1, D-5060 Bergisch Gladbach (DE)
Erfinder: Sillah, Ousmane, Dr. Dr.rer.nat., Broicherstrasse 29, D-5060 Bergisch Gladbach (DE)
Erfinder: Emr, Anton, Siebengebirgsallee 22, D-5000 Köln (DE)

(74) Vertreter: Mehl, Ernst, Dipl.-Ing., Postfach 22 01 76, D-8000 München 22 (DE)

EP 0 094 547 B1

### Beschreibung

Die vorliegende Erfindung betrifft eine Anlage nach dem Oberbegriff des ersten Anspruchs. Organische Stoffe, die in dem Deponiegut enthalten sind, zersetzen sich unter anaeroben Bedingungen unter Freisetzung eines Faulgases, das etwa je zur Hälfte aus Methan und Kohlendioxid besteht. Dieses Gas, das z. B. den Pflanzenwuchs auf abgeschlossenen Deponien schädigt und zu Geruchsbelästigungen der Umwelt führt, muß unschädlich gemacht werden, wofür in den Deponien Gasentnahmesysteme angelegt werden und das austretende Gas abgefackelt oder einer nutzbringenden Verwendung als Heizmaterial zugeführt wird. Bei großen Abfalldeponien kann über 20 Jahre und länger mit dem Anfall einer wirtschaftlich interessanten Gasmenge gerechnet werden.

Es muß ferner damit gerechnet werden, daß ein Teil der im Einzugsbereich der Deponie fallenden Niederschläge durch die Deckschichten und den Abfall hindurchsickert und an einer tiefer gelegenen Stelle in einer so verschmutzten Form wieder zutage tritt, daß eine Reinigung dieses Wassers erforderlich ist. In dem Aufsatz von G. Kreischer: "Verdampfung von Sickerwasser mittels Deponiegas" aus Band 9: "Fortschritte der Deponietechnik" der "Stuttgarter Berichte zur Abfallwirtschaft", Bielefeld 1978 wird bereits der Vorschlag gemacht, das Sickerwasser in einem zweistufigen Verfahren zu verdampfen, bei dem in der ersten Stufe das Sickerwasser in einem mit Heißwasser von 170° Celsius beheizten Dünnschichtverdampfer von einem großen Teil der Verunreinigungen befreit wird und der entstehende Dampf zusammen mit dem auf der gleichen Deponie gewonnenen Faulgas und unter Zusatz von Verbrennungsluft der Feuerung des zur Erzeugung des heißen Wassers verwendeten Kessels zugeführt wird; in dieser zweiten Stufe wird der Dampf kurzzeitig auf Temperaturen oberhalb von 800° Celsius überhitzt, wobei die noch verbleibenden organischen Rückstände zu unschädlichen Komponenten zersetzt werden. Der Dampf wird dann zusammen mit dem Rauchgas in die Atmosphäre entlassen. Um das Unterschreiten von Taupunkten zu verhindern, weist das Gas-Dampfgemisch beim Verlassen der Anlage immer noch Temperaturen um 400° Celsius auf. Eine optimale Nutzung der im Faulgas enthaltenen Energie ist so nicht möglich. Bei der zeitlich oft schwankenden Zusammensetzung des Faulgases und der dadurch bedingten Unterschiede im Heizwert ist zudem nicht sichergestellt, daß die geforderte Temperatur von 800° Celsius für die Dauer von 0,3 s auch wirklich erreicht wird. Dieses Dokument offenbart alle Merkmale, welche om Oberbegriff des Anspruches 1 erwähnt sind.

Aufgabe der vorliegenden Erfindung ist eine Anlage, die die beschriebenen Nachteile vermeidet, insbesondere einen größeren Teil der in die Verdampfung des Sickerwassers hineingesteckten Wärmeenergie zurückzugewinnen gestattet. Für einen dann noch verbleibenden Überschuß an Faulgas sind bereits andere nutzbringende Verwendungen gefunden worden, z. B. die Heizung von Gebäuden.

Diese Aufgabe wird gelöst durch die Kombination der im kennzeichnenden Teil des ersten Anspruchs genannten Merkmale. Die Rektifiktion stellt ein bekanntermaßen zur möglichst vollständigen Trennung von Stoffen geeignetes Verfahren dar, so daß das im nachgeschalteten Kondensator aus dem Dampf niedergeschlagene Wasser einen sehr hohen Reinheitsgrad erreicht und - neben einer teilweisen Rückführung in die Rektifiktionssäule - unmittelbar wieder in den natürlichen Wasserkreislauf eingespeist werden kann. Unterstützt wird die Reinigungswirkung der Rektifikationssäule durch den Luftzusatz, der den Sauerstoffbedarf beim biologischen und chemischen Abbau von Schadstoffen deckt. Die Parameter der Anlage können unschwer so gewählt werden, daß aus dem Kondensator ein verbleibender Teil des Luft/Dampfgemisches austritt, der wie im oben beschriebenen Verfahren dem einer Feuerung zugeführten Faulgas beigemischt werden kann, wobei die Menge dieses Gemisches dem eventuell wechselnden Heizwert des Gases angepaßt werden kann. Eine Erreichung der angestrebten Temperatur von 800° Celsius ist so gesichert. Da nur ein Bruchteil des Wassers in Dampfform an die Atmosphäre abgegeben zu werden braucht, kann ein größerer Teil der durch die Verbrennung des Gases freigesetzten Wärme für die Beheizung der Rektifiziersäule verwendet werden, bzw. verringert sich der hierfür erforderliche Gasbedarf. Die Vorwärmung des in die Anlage eintretenden Sickerwassers mit Hilfe der im Kondensator zurückgewonnenen Wärme verbessert den Wirkungsgrad weiter.

Eine noch verbesserte Wärmeausnutzung wird durch die im zweiten Anspruch vorgeschlagene parallele Verarbeitung von Teilmengen des Sickerwassers in jeweils getrennten Rektifiziersäulen ermöglicht.

Die im dritten Anspruch vorgeschlagene Anordnung gestattet einen vereinfachten Austrag der beim Rektifiziervorgang anfallenden Feststoffe, die nicht, wie bei dem oben beschriebenen Verfahren mühsam aus dem Verdampfer entfernt werden müssen.

Wegen der durch die erfindungsgemäße Anlage verbesserten Ausnutzung des Faulgases kann ein Überschuß an demselben zur Verfügung stehen, für den im vierten anspruch eine nutzbringende Verwendung vorgeschlagen wird. Der mit dem Faulgas beheizte Kessel wird so weit vergrößert, daß die Gesamtheit des zur Verfügung stehenden Gases zur Erzeugung von Dampf verwendet wird, mit dessen Hilfe z. B. ein Turbogenerator betrieben werden kann. Die wie oben ausgeführt anzustrebenden hohen Temperaturen in der Feuerung gestatten die Erreichung wirtschaftlich nutzbarer Dampfzustände. Die Beheizung der Rektifiziersäulen erfolgt dann nur noch mit der Abwärme der betriebenen Kraftmaschine.

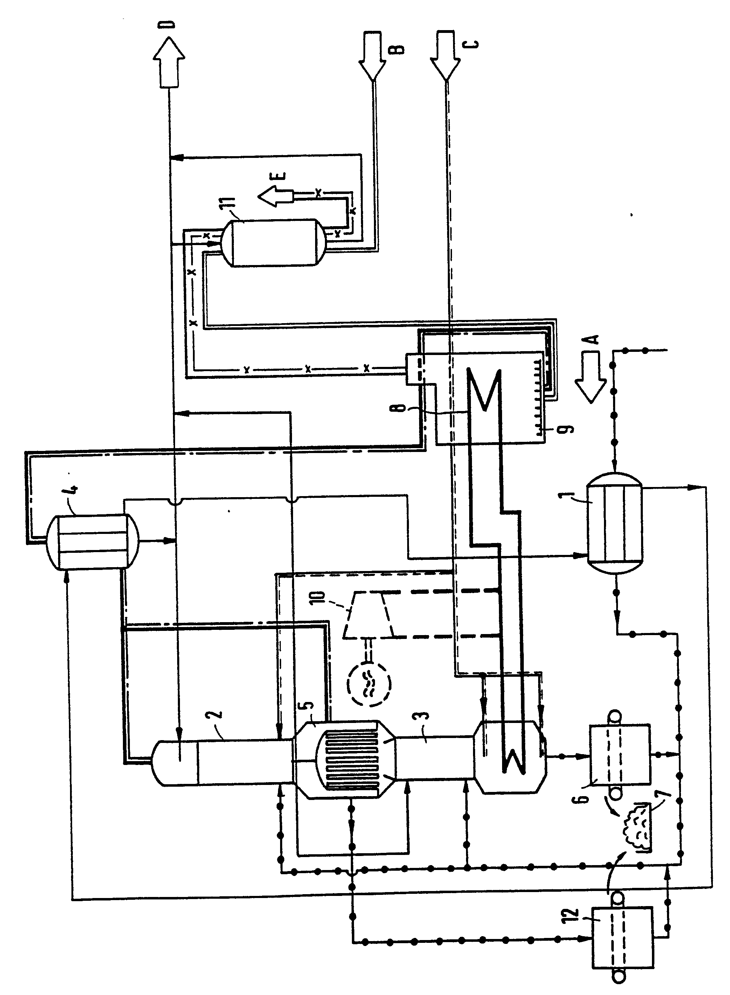

Ein Ausführungsbeispiel der erfindungsgemäßen Anlage ist schematisch in der Zeichnung dargestellt, wobei zur Verbesserung der Übersichtlichkeit auf die Darstellung der Pumpen verzichtet wurde, mit denen einzelne der bewegten Fluide umgewälzt werden müssen, deren Größe und Anordnung jedoch in Abhängigkeit von den im Einzelfall unter Berücksichtigung der natürlichen Gegebenheiten zu wählenden Parametern unterschiedlich sein kann und deren Wahl dem Fachmann keine Schwierigkeiten bereitet.

Mit A ist der Eingang des Sickerwassers (Strichsignatur mit Punkten) bezeichnet, das nach Durchlaufen eines der Vorwärmung dienenden Wärmetauschers 1 zwei parallel geschalteten Rektifiziersäulen 2,3 zugeführt wird. Jede der Rektifiziersäulen ist mit einem nachgeschalteten Kondensator 4,5 versehen. Die untere Rektifiziersäule 3 wird dabei mit einem höheren Druck betrieben als die obere Rektifiziersäule 2, so daß die im Kondensator 5 anfallende Wärme mittelbar zur Beheizung der letzeren Verwendung finden kann. Ein Teil des Kondensates (dünner Einzelstrich) aus den Kondensatoren 4,5 wird in bekannter Weise in die Rektifiziersäulen 2,3 zurückgeleitet. Den Rektifiziersäulen 2,3 wird von einem Eingang C her Luft (Doppelstrich voll und unterbrochen) zugeführt, die bereits einen Teil der im Sickerwasser enthaltenen Verunreinigungen austreibt und deren Sauerstoff andererseits die Oxidation der im Sickerwasser gelösten Schadstoffe, insbesondere organischer Art unterstützt. Aus dem Sumpf der Rektifiziersäulen 2,3 werden die sich ansammelnden Rückstände über je eine Abscheidevorrichtung 6,12, in der die Feststoffe aus dem Gemisch entfernt und einer erneuten Ablagerung 7 zugeführt werden, in die Eintrittsleitung des Sickerwassers zurückgespeist. Das zur Kühlung des Kondensators 4 verwendete Wasser (dünner Einzelstrich) gibt seine Wärme in dem Wärmetauscher 1 an das eintretende Sickerwasser ab. Ein Teil des in den Kondensatoren 4,5 anfallenden Kondensates kann, da das Wasser (dünner Einzelstrich) ausreichend gereinigt ist, bei einem Ausgang D dem natürlichen Wasserkreislauf wieder zugeführt werden. Das aus den Rektifiziersäulen 2,3 austretende Luft/Dampfgemisch (Doppelstrich voll und strichpunktiert) wird in den Kondensatoren 4,5 nicht vollständig niedergeschlagen; ein Teil wird vielmehr dem Faulgas (Doppelstrich voll) beigemischt, das bei dem Eingang B der Anlage zugeführt wird und durch die Verbrennung dieses Gases in einer Feuerung 9 überhitzt, worauf es zusammen mit den Rauchgasen (Einfachstrich mit Kreuzen) bei einem Ausgang E die Anlage verläßt. Die Feuerung 9 dient zur Beheizung eines Wasser/Dampfkreislaufes 8 (Dicker Einzelstrich), mit dessen Hilfe die Rektifiziersäulen 2,3 beheizt werden. Lassen Menge und Qualität des zur Verfügung stehenden Faulgases es zu, kann es vorteilhaft sein, mit dem erzeugten Dampf eine Kraftmaschine, z. B. einen Turbogeneratorsatz 10 zu betreiben und die Beheizung der Rektifiziersäulen 2,3 lediglich mit dem Abdampf vorzunehmen. Die vom Turbogenerator 10 erzeugte elektrische Energie kann zum Antrieb der hier nicht dargestellten Pumpen und anderen Hilfseinrichtungen der Anlage selbst verwendet werden. Die Energieversorgung der notwendigerweise meist abgelegenen Abfalldeponien kann so entscheidend verbessert werden. Das Rauchgas/Dampfgemisch aus der Feuerung 9 und/oder das Faulgas vor Eintritt in dieselbe kann dazu benutzt werden, in einer Vorrichtung 11 mit dem abzugebenden, gereinigten Wasser in Austausch zu treten, um durch den Übergang von Kohlendioxid in das Wasser dessen pH-Wert dem gewünschten Wert anzunähern. Für die Rektifiziersäulen 2,3 empfiehlt sich eine Füllung aus keramischen Formkörpern, vorzugsweise sog. Raschigringen.

**Patentansprüche**

1. Anlage zur Beseitigung von Sickerwasser (A) und Faulgas (B) in Abfalldeponien mit einem Verdampfer (2, 3), in dem das Sickerwasser verdampft wird, und mit einer Feuerung (9) zur Verbrennung des Gases und zur indirekten Beheizung des Verdampfers, der neben dem Faulgas auch der Dampf zugeführt wird, dadurch gekennzeichnet, daß der Verdampfer mindestens eine Rektifiziersäule (2, 3) ist, in der das Sickerwasser (A) unter Luftzusatz (C) verdampft wird, und daß zwischen die Rektifiziersäule (2, 3) und die Feuerung (9) mindestens ein Kondensator (4, 5) geschaltet ist, in dem ein Teil des Wasserdampfes kondensiert, und dessen Kühlwasserkreislauf an einen Wärmetauscher (1) zur Vorwärmung des der Anlage zugeführten Sickerwassers (A) angeschlossen ist.

2. Anlage nach Anspruch 1, dadurch gekennzeichnet, daß zwei oder mehr bei unterschiedlichem Druck betriebene, parallelgeschaltete Rektifiziersäulen (2, 3) mit je einem Kondensator (4, 5) vorhanden sind, wobei der Kondensator (5) der mit höherem Druck betriebenen Rektifiziersäule (3) mit der mit niedrigerem Druck betriebenen Rektifiziersäule (2) zur Beheizung verbunden ist.

3. Anlage nach Anspruch 1 oder 2, dadurch gekennzeichnet, daß der Sumpf der Rektifiziersäulen (2, 3) über je eine Abscheidevorrichtung (6, 12) für feste Stoffe mit den Eintrittsleitungen für das Sickerwasser (A) verbunden ist.

4. Anlage nach einem oder mehreren der Ansprüche 1 bis 3, dadurch gekennzeichnet, daß in den Wasser/Dampfkreislauf (8) zwischen Rektifiziersäule (2, 3) und Feuerung (9) eine einen elektrischen Generator antreibende
Kraftmaschine (10) eingeschaltet ist.

## Claims

1. An installation for eliminating seepage water (A) and sewer gas (9) from rubbish tips, comprising a vaporiser (2, 3) in which the seepage water is vaporised, and a furnace (9) which serves to burn the gas and indirectly to heat the vaporiser which is supplied not only with the sewer gas but also with the steam, characterised in that the vaporiser consists of at least one rectifier column (2, 3) in which the seepage water (A) is vaporised in the presence of added air (C);

and that between the rectifier column (2, 3) and the furnace (9), at least one condenser (4, 5) is connected, in which a part of the steam is condensed and the coolant cycle of which is connected to a heat exchanger (1) which serves to pre-heat the seepage water (A) which is supplied to the installation.

2. An installation as claimed in Claim 1, characterised in that there are provided two or more rectifier columns (2, 3) which are operated at different pressures and are connected in parallel, each of which has a condenser (4, 5), the condenser (5) of the rectifier column (3) which is operated at the higher pressure being connected for heating purposes to the rectifier column (2) which is operated at the lower pressure.

3. An installation as claimed in Claim 1 or Claim 2, characterised in that the sump of the rectifier columns (2, 3) is in each case connected to the inlet line for the seepage water (A) through a respective separating device (6, 12) for solid materials.

4. An installation as claimed in one or more of Claims 1 to 3, characterised in that an engine (10) which drives an electric generator is connected in the water/steam cycle (8) between the rectifier column (2, 3) and the furnace (9).

## Revendications

1. Installation pour éliminer les eaux d'infiltration (A) et les gaz de décomposition (B) dans des décharges de déchets, comprenant un évaporateur (2, 3) dans lequel l'eau d'infiltration est évaporée et un foyer (9) qui est destiné à la combustion du gaz et au chauffage indirect de l'évaporateur et auquel est envoyée également, outre le gaz de décomposition, la vapeur, caractérisée en ce que l'évaporateur est au moins une colonne de rectification (2, 3) dans laquelle l'eau d'infiltration (A) est évaporée avec addition d'air (C) et en ce que, entre la colonne de rectification (2, 3) et le foyer (9) est monté au moins un condenseur (4, 5) dans lequel une partie de la vapeur d'eau se condense et dont le circuit d'eau de refroidissement est raccordé à un échangeur de chaleur (1) pour préchauffer l'eau d'infiltration (A) amenée à l'installation.

2. Installation suivant la revendication 1, caractérisée en ce qu'il est prévu deux ou plusieurs colonnes de rectification (2, 3) montées en parallèle fonctionnant sous des pressions différentes et ayant chacune un condenseur (4, 5), le condenseur (5) de la colonne de rectification (3), fonctionnant sous la pression la plus élevée, communiquant pour le chauffage avec la colonne de rectification (2) fonctionnant sous la pression la plus basse.

3. Installation suivant la revendication 1 ou 2, caractérisée en ce que le bas des colonnes de rectification (2, 3) communique respectivement par des dispositifs de séparation (6, 12) de matières solides, avec les conduits d'entrée de l'eau d'infiltration (A).

4. Installation suivant l'une ou plusieurs des revendications 1 à 3, caractérisée en ce que dans le circuit d'eau et de vapeur (8) entre les colonnes de rectification (2, 3) et le foyer (9) est montée une machine motrice (10) entraînant une génératrice électrique.

0 094 547